# EUROPEAN PATENT APPLICATION

(11) **EP 1 918 321 A2**
(43) Date of publication of application: **07.05.2008**
(21) Application number: 07017496.6
(22) Date of filing: 06.09.2007
(51) Int. Cl.: C08K 3/40, C08K 7/00

(54) **Molded product and method of producing the same**

(30) Priority: 20.09.2006 JP 2006254253
(71) Applicant: Sumitomo Metal Mining Co., Ltd., Tokyo 105-8716 (JP)
(72) Inventor: Kobayashi, Hiroshi, Ichikawa-shi Chiba, 272-0835 (JP)
(74) Representative: Müller-Boré & Partner Patentanwälte

(57) **Abstract**

A molded product using flake-shaped glass of good weatherability that has simultaneously the conflicting functions of light diffusivity and translucency required for a window material for a lighting window, a waist-high window and the like, a construction material for a carport and the like, a protecting cover for a lighting fixture and the like, and the like, and production method thereof.

A molded product having both of translucency and light diffusivity that is obtained by molding a resin composition blended with flake-shaped glass of 0.1 to 20% by weight relative to a transparent thermoplastic resin and contains the flake-shaped glass of 5 to 50 µm mean particle diameter at a ratio of 6 to 44.5 g/m² per unit area therein; the molded product is provided by a production method for a molded product characterized in that flake-shaped glass having 5 to 50 µm mean particle diameter is blended with a thermoplastic resin at 0.1 to 20% by weight relative to the thermoplastic resin followed by melt-kneading and then the obtained master batch is molded into a predetermined shape to obtain a molded product containing the flake-shaped glass at a ratio of 6 to 44.5 g/m² per unit area of the molded product.

## Description

The present invention relates to a molded product and production method thereof, and in particular to a molded product using flake-shaped glass that has simultaneously the conflicting functions of light diffusivity and translucency required for a window material for a lighting window, a waist-high window and the like, a construction material for a carport and the like, a protecting cover for a lighting fixture and the like, and the like, along with a good weatherability, and production method thereof.

Because a paned window of a building or a house is generally made of transparent glass, an object near the paned window is visible from both the inside and the outside. On the other hand, for use in window material for a lighting window, a waist-high window and the like, a construction material for a carport and the like, a protecting cover for a lighting fixture and the like, and the like, the material is required to have simultaneously the conflicting functions of light diffusivity and translucency for the purpose of privacy protection, design and taking soft light in the house. It is proposed that a transparent resin as a matrix is blended with an organic or inorganic filler and the obtained resin composition is molded into a predetermined shape.

Specifically, a method, which disperses particles of a transparent polymer or an inorganic substance in a transparent matrix resin represented by a polycarbonate resin and makes use of the difference in the refractive indexes of the transparent matrix resin and the particles dispersed in the transparent matrix resin, is known.
As an example, a board-shaped material for lighting made of a translucent polycarbonate resin having an excellent heat intercepting effect is proposed (see Patent Document 1) and a molded product formed by dispersing mica coated with titanium oxide in the polycarbonate resin is disclosed. Translucency of the molded product, however, is in inverse proportion to light diffusivity. In addition, there is a fear of lowering of mechanical strength and degradation of design caused by further deterioration of a transparent matrix resin due to photo catalytic effect of titanium oxide.

In addition, like a cover of a lighting fixture through which the bulb inside the cover is invisible from the outside when turned off, a translucent thermoplastic article is proposed (see Patent Document 2) and a molded product formed by dispersing spherical transparent polymer particles such as cross-linked PMMA particles having a different refractive index from that of a matrix resin in the matrix resin such as a transparent polycarbonate resin is disclosed. In addition, a material for producing a signboard and a backlight diffuser panel for liquid crystal in addition to a cover of a lighting fixture is proposed (see Patent Document 3) and a composition formed by dispersing bead-like cross-linked PMMA particles and glass fiber at a predetermined ratio in a polycarbonate resin is disclosed.
The thermoplastic article proposed in Patent Document 2, however, sometimes has the haze lowered to 40% or less at a total light transmittance of 85% or higher. On the other hand, a molded product having simultaneously the conflicting functions of light diffusivity and translucency to be obtained using the composition for a molded product disclosed in Patent Document 3 requires a large amount of cross-linked PMMA particles and glass fiber relative to the amount of a polycarbonate resin to be blended, and thus there has been a fear that the characteristic of the molded product is impaired because of difficulty of maintaining weatherability and impact resistance of the polycarbonate resin.

Further, a molded product having flame resistance in addition to light diffusivity and translucency to be used for above articles is proposed (see Patent Document 4) and a molded product formed by molding a composition containing an alkaline (alkaline-earth) metal salt of an organic acid, transparent polymer particles and a fluoropolymer at a predetermined ratio in a polycarbonate resin is disclosed. Translucency of the molded product, however, has been sometimes in inverse proportion to light diffusivity, although flame resistance is given to the molded product. In addition, since PMMA particles are used as transparent polymer particles, the PMMA particles themselves have been sometimes degraded by heat or shearing force and the like when producing the molded product under some molding conditions.

In these situations, a molded product that has simultaneously the conflicting functions of desired light diffusivity and translucency and also has not the transparent matrix resin degraded by the blended components has been demanded.
Patent Document 1: JP-A-2-173060
Patent Document 2: JP-A-2002-529569
Patent Document 3: Jp-A-10-36655
Patent Document 4: JP-A-2006-143949

Considering the above problems, an object of the present invention is to provide a molded product using flake-shaped glass that has simultaneously the conflicting functions of light diffusivity and translucency required for a window material for a lighting window, a waist-high window and the like, a construction material for a carport and the like, a protecting cover for a lighting fixture and the like, and the like, along with a good weatherability, and production method thereof.

The present inventor has found, after having intensively studied a way for solving the above problems, that in a molded product having glass and a thermoplastic resin as main components, flake-shaped glass having a specific particle diameter as the glass component uniformly dispersed in the thermoplastic resin shows a characteristic optical function and that a molded product having simultaneously the conflicting functions of light diffusivity and translucency can be obtained by molding a resin composition containing the flake-shaped glass so that the flake-shaped glass may be contained at a specific ratio to the unit area of the molded product, and has completed the present invention.

Namely, according to the first invention of the present invention, a molded product having both of translucency and light diffusivity that is obtained by molding a resin composition blended with flake-shaped glass of 0.1 to 20% by weight relative to a transparent thermoplastic resin and characterized by containing the flake-shaped glass of a mean particle diameter of 5 to 50 µm therein at a ratio of 6 to 44.5 g/m² per unit area of the molded product, is provided.

According to the second invention of the present invention, a molded product characterized in that the flake-shaped glass is glass powder containing 50 to 65% by mole of SiO₂, 4 to 12% by mole of Al₂O₃, 5 to 25% by mole of SrO, 15% by mole or less of MgO, 10 to 35% by mole of CaO and 2% by.mole or less of an alkaline metal oxide in the first invention, is provided.
According to the third invention of the present invention, a molded product characterized in that the flake-shaped glass has an average thickness of 0.1 to 5.0 µm and an average aspect ratio of 2 to 50 in the first invention, is provided.

According to the fourth invention of the present invention, a molded product characterized in that the thermoplastic resin is at least one resin selected from a polycarbonate resin, a (meth) acrylic resin, a polyester resin, a polyetherimide resin, a polystyrene resin, a (meth) acryl-styrene copolymer (MS resin), a polyethersulfone resin, a fluorine-based resin, a vinyl-based resin and a polyolefin resin in the first invention, is provided.

According to the fifth invention of the present invention, a molded product characterized in that the total light transmittance thereof is 60% or higher and the haze thereof is 80% or higher in the first invention, is provided.

On the other hand, according to the sixth invention of the present invention, a production method for a molded product characterized in that flake-shaped glass having a mean particle diameter of 5 to 50 µm is blended with a thermoplastic resin at 0.1 to 20% by weight relative to the thermoplastic resin followed by melt-kneading and then the obtained master batch is molded into a predetermined shape to obtain a molded product containing the flake-shaped glass at a ratio of 6 to 44.5 g/m² per unit area of the molded product in relation to the first to fifth inventions, is provided.

According to the seventh invention of the present invention, a production method for a molded product characterized in that the molding material composed of the same kind of thermoplastic resin as the above thermoplastic resin or a thermoplastic resin compatible therewith is added to the master batch and kneaded in the sixth invention, is provided.
According to the eighth invention of the present invention; a production method for a molded product characterized in that a master batch is molded by any one method selected from injection molding, extrusion molding, compression molding and rotation molding in the sixth invention, is provided.
According to the ninth invention of the present invention, a production method for a molded product characterized in that a master batch is molded into any shape of a window material for a lighting window, a construction material for a carport and a protecting cover material for a lighting fixture in the sixth invention, is provided.

The molded product of the present invention uses flake-shaped glass having a specific particle diameter as the glass component, which is mixed with a thermoplastic resin at a specific ratio to the thermoplastic resin and uniformly dispersed in the thermoplastic resin at a specific ratio to the unit area thereof, and thus has simultaneously the conflicting functions of light diffusivity and translucency.
In addition, the molded product of the present invention has a good weatherability against sunlight and ultraviolet light and the like received in use. The molded product of the present invention, therefore, can give not only performance such as mechanical strength, but also the functions such as privacy protection, design and taking soft light in the house to a window material for a lighting window, a waist-high window and the like, a construction material for a carport and the like, a protecting cover for a lighting fixture and the like, and the like, and thus can be used in broad area.

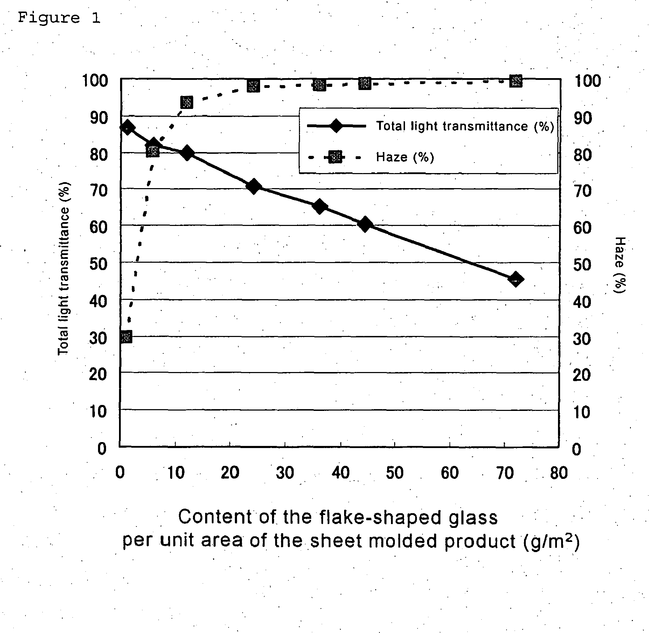

Figure 1: A graph showing the relations of the total light transmittance and the haze, and the content of the flake-shaped glass per unit area of the sheet-shaped molded product.

### 1. Molded product

The molded product of the present invention is a molded product having both of translucency and light diffusivity that is obtained by molding a resin composition blended with flake-shaped glass of 0.1 to 20% by weight relative to a transparent thermoplastic resin and characterized by containing the flake-shaped glass of a mean particle diameter of 5 to 50 µm therein at a ratio of 6 to 44.5 g/m² per unit area thereof.

### (A) Flake-shaped glass

In the present invention, any flake-shaped glass that is glass powder having a mean particle diameter of 5 to 50 µm and a shape of a scale can be used without limitation regardless of the composition of the glass. The mean particle diameter herein is defined as the square root of the area S of flake-shaped glass viewed in the flat and measured with a particle size distribution measuring instrument using a laser diffraction-scattering method. The glass powder of a mean particle diameter of 8 to 30 µm is particularly preferable. A molded product having flake-shaped glass of a mean particle diameter deviated from the above range as the main component can not give the desired optical characteristic. Flake-shaped glass having an average thickness of 0.1 to 5.0 µm and an average aspect ratio of 2 to 50 is more preferable.

The average thickness is a simple average value of 50 flake-shaped glass particles observed with an electron microscope and the average aspect ratio is calculated by dividing the above mean particle diameter by the above average thickness.

The preferable flake-shaped glass in the present invention is, for example, glass powder containing 50 to 65% by mole of SiO₂, 4 to 12% by mole of Al₂O₃, 5 to 25% by mole of SrO, 15% by mole or less of MgO, 10 to 35% by mole of CaO and 2% by mole or less of an alkaline metal oxide.

Silicon dioxide (SiO₂) among these substances is a main component to form a skeleton of glass and also a component to improve acid resistance. Glass having a SiO₂ content of lower than 50% by mole has poor acid resistance, whereas glass having a SiO₂ content of higher than 65% by mole has a high melting point and makes it difficult to uniformly melt raw materials. Consequently, SiO₂ is preferably in the range of 50 to 65% by mole and more preferably in the range of 55 to 65% by mole.
Aluminum oxide (Al₂O₃) is a component to adjust devitrification temperature and viscosity during glass formation and also a component to improve water resistance. Glass having a Al₂O₃ content lower than 4% by mole can not give enough effect to adjust devitrification temperature and viscosity and to improve water resistance. On the other hand, glass having an Al₂O₃ content of 12% by mole or higher has a high melting point and makes it difficult to uniformly melt raw materials. Consequently, Al₂O₃ is preferably in the range of 4 to 12% by mole and more preferably in the range of 4 to 10% by mole.
Preferably, diboron trioxide (B₂O₃) is not substantially contained. Being not substantially contained means being not intentionally added except, for example, being inevitably mixed-in from industrial raw materials. Specifically, diboron trioxide should be less than 0.5% by mole.
Magnesium oxide (MgO) and calcium oxide (CaO) are components to adjust devitrification temperature and viscosity during glass formation. Strontium oxide (SrO) is a component to adjust devitrification temperature and viscosity during glass formation and also known to be a component to increase the ability of glass for X-ray absorption. Flake-shaped glass not having too low devitrification temperature can be obtained by setting the above particular composition range of strontium oxide in the present invention.
Glass having a SrO content lower than 5% by mole can not give enough effect to adjust devitrification temperature and viscosity. On the other hand, glass having a SrO content higher than 25% by mole has high devitrification temperature. Consequently, SrO is preferably in the range of 5 to 25% by mole and more preferably in the range of 5 to 20% by mole.
Glass having a sum of contents of MgO and SrO of 10% by mole or lower can not sometimes give enough effect to adjust devitrification temperature and viscosity. On the other hand, glass having a sum of contents of MgO and SrO higher than 30% by mole has high devitrification temperature. Consequently, the sum of contents of MgO and SrO is preferably in the range of 10 to 30% by mole and more preferably in the range of 10 to 20% by mole. Glass having a sum of contents of MgO, CaO and SrO lower than 20% by mole cannot sometimes give enough effect to adjust devitrificationtemperature and viscosity. On the other hand, glass having a sum of contents of MgO, CaO and SrO higher than 45% by mole, has high devitrification temperature. Consequently, the sum of contents of MgO, CaO and SrO is preferably in the range of 20 to 45% by mole and more preferably in the range of 25 to 35% by mole. MgO is not an essential component, but glass having a MgO content.of higher than 15% by mole has high devitrification temperature. Consequently, MgO is preferably in the range of 0 to 15% by mole and more preferably in the range of 0 to 10% by mole. Glass having a CaO content lower than 10% by mole cannot give enough effect to adjust devitrification temperature and viscosity. On the other hand, glass having a CaO content higher than 35% by mole has high devitrification temperature. Consequently, CaO is preferably in the range of 10 to 35% by mole and more preferably in the range of 10 to 30% by mole.
Preferably, barium oxide (BaO) and zinc oxide (ZnO) are not substantially contained. Specifically, each component should be less than 0.5% by mole.
An alkaline metal oxide (Li₂O Na₂O, K₂O) is a component to adjust devitrification temperature and viscosity during glass formation. Glass having a content of an alkaline metal oxide of 2% by mole or higher has low glass transition temperature and poor heat resistance. On the other hand, glass containing no alkaline metal oxide at all has a high melting point and makes it difficult to uniformly melt raw materials. Consequently, the sum of contents of Li₂O, Na₂O and K₂O is preferably in the range of 0 to 2% by mole.
Zirconium oxide (ZrO₂) may be contained up to 5% by mole although it increases a devitrification speed of glass. Preferably, fluorine (F) is not substantially contained.
Iron (Fe) present in glass is usually in the state of an iron oxide (FeO or Fe₂O₃). Fe₂O₃ is a component to increase the characteristic of glass for ultraviolet absorption, whereas FeO is a component to increase the characteristic of glass for heat absorption. Iron (Fe) is not an essential component, but may be contained to adjust optical characteristics of glass.
Titanium oxide (TiO₂) is a component to improve melting nature and chemical resistance of glass and also the characteristic of glass for ultraviolet absorption. TiO₂ is not an essential component, but may be contained to adjust optical characteristics of glass. Sulfur trioxide (SO₃) is not an essential component, but can be used as a fining agent.

As the flake-shaped glass having the above composition, Glass flake made by Nippon Sheet Glass Co., Ltd., for example, can be used. This flake-shaped glass, of which the detail is described in JP-A-2005-97080, is excellent in heat resistance and free from deformation even at high temperature, and also has the characteristic of not polluting the working environment because it does not substantially contain diboron trioxide (B₂O₃), barium oxide (BaO), zinc oxide (ZnO) and fluorine (F). The flake-shaped glass is said to be preferably blended in paint, cosmetics and ink, but has not been used for a molding material for a lighting window and the like.

Flake-shaped glass can be subjected to surface treatment with a coupling agent such as aminosilane and epoxysilane in order to improve adhesion ability with a thermoplastic resin. Amount of a coupling agent to be used may be 1 to 5% by weight relative to the weight of flake-shaped glass.
Flake-shaped glass can be used as a mixture with the glass of other shape such as glass fiber, milled glass, glass bead and glass powder within the range where the object of the present invention is not impaired. These may be used alone or in combination of two or more. The content of these is 30% by weight or lower, preferably 10% by weight or lower.

### (B) Thermoplastic resin

Any thermoplastic resin can be used without particular limitation as long as it has high light transmittance in the visible light range and transparency.

The thermoplastic resin includes, specifically a polycarbonate resin, a (meth) acrylic resin, a polyetherimide resin, a polyester resin, a polystyrene resin, a (meth) acryl-styrene copolymer (MS resin), a polyethersulfone resin, a fluorine-based resin, a vinyl-based resin and a polyolefin resin. In the case of molding for a window material for a lighting window, a waist-high window and the like, a construction material for a carport and the like, a protecting cover for a lighting fixture and the like, a polycarbonate resin, a (meth) acrylic resin, a polyetherimide resin and a fluorine-based resin are more preferable, considering transparency, impact resistance, weatherability and the like of the resin. With regard to desirable properties, the visible light transmittance according to JIS R 3106 is 50% or higher and the haze according to JIS K 7105 is 30% or lower for a board-shaped molded product of 3mm in thickness.

The particularly preferable polycarbonate resin in the present invention is an aromatic polycarbonate. The aromatic polycarbonate is synthesized using at least one of divalent phenol-based compounds represented by 2,2-bis(4-hydroxyphenyl)propane and 2,2-bis(3,5-dibromo-4-hydroxyphenyl)propane, and a carbonate precursor represented by phosgene or diphenyl carbonate. The method for synthesis includes a known method such as interfacial polymerization, melt polymerization or solid-phase polymerization.

Herein, with regard to the divalent phenol-based compound, for example, bis(hydroxyaryl)alkanes such as bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, bis(4-hydroxyphenyl)phenylmethane, 2,2-bis(4-hydroxy-3-methylphenyl)propane, 2,2-bis(4-hydroxy-3,5-dimethylphenyl)propane, 1,1-bis(4-hydroxy-t-butylphenyl)propane, 2,2-bis(4-hydroxy-3-bromophenyl)propane and 2,2-bis(4-hydroxy-3,5-dibromophenyl)propane; bis(hydroxyaryl)cycloalkanes such as 1,1-bis(4-hydroxyphenyl)cyclopentane and 1,1-(4-hydroxyphenyl)cyclohexane; dihydroxyarylethers such as 4,4'-dihydroxydiphenyl ether and bis(4-hydroxy-3-methylphenyl) ether; dihydroxydiaryl sulfides such as 4,4'-dihydroxydiphenyl sulfide and bis(4-hydroxy-3-methylphenyl) sulfide; dihydroxydiaryl sulfoxides such as 4,4'-dihydroxydiphenyl sulfoxide and bis(4-hydroxy-3-methylphenyl) sulfoxide; dihydroxydiaryl sulfones such as 4,4'-dihydroxydiphenyl sulfone and bis(4-hydroxy-3-methylphenyl) sulfone; and 4,4-biphenol. Besides these, for example, resorcin and substituted resorcins such as 3-methylresorcin, 3-ethylresorcin, 3-propylresorcin, 3-butylresorcin, 3-t-butylresorcin, 3-phenylresorcin, 3-cumylresorcin, 2,3,4,6-tetrafluororesorcin and 2,3,4,6-tetrabromoresorcin; catechol; hydroquinone and substituted hydroquinones such as 3-methylhydroquinone, 3-ethylhydroquinone; 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone and 2,3,5,6-tetrabromohydroquinone; and 2,2,2',2'-tetrahydro-3,3,3',3'-tetramethyl-1,1'-spirobis(1H -indene)-7,7'diol can be used. These divalent phenol-based compounds may be used alone or in combination of two or more.

The carbonate precursor represented by phosgene or diphenyl carbonate and the like, which is subjected to reaction with these divalent phenol-based compounds, is not particularly limited, and includes, for example, ditolyl carbonate, bis (chlorophenyl) carbonate, m-cresyl carbonate, dinaphthyl carbonate, bis (diphenyl) carbonate, diethyl carbonate, dimethyl carbonate, dibutyl carbonate and dicyclohexyl carbonate and the like, but is not limited to these compounds. Preferably, diphenyl carbonate is used. These carbonate precursors also may be used alone or in combination of two or more.

Dicarboxylic acid or dicarboxylic acid ester may be contained as an acid component when producing a polycarbonate. Examples of dicarboxylic acid or dicarboxylic acid ester include aromatic dicarboxylic acids such as terephthalic acid, isophthalic acid, diphenyl terephthalate and diphenyl isophthalate; aliphatic dicarboxylic acids such as succinic acid, glutaric acid, adipic acid, pimelic acid, suberic acid, azelaic acid, sebacic acid, decanedioic acid, dodecanedioic acid, diphenyl sebacate, diphenyl decanedioate and diphenyl dodecanedioate; alicyclic dicarboxylic acids such as cyclopropanedicarboxylic acid, 1,2-cyclobutanedicarboxylic acid, 1,3-cyclobutanedicarboxylic acid, 1;2'-cyclopentanedicarboxylic acid, 1,3-cyclopentanecarboxylic acid, 1,2-cyclohexanedicarboxylic acid, 1,3-cyclohexanedicarboxylic acid, 1,4-cyclohexanedicarboxylic acid, diphenyl cyclopropanedicarboxylate, diphenyl 1,2-cyclobutanedicarboxylate, diphenyl 1,3-cyclobutanedicarboxylate, diphenyl 1,2 -cyclopentanedicarboxylate, diphenyl 1;3-cyclopentanedicarboxylate, diphenyl 1,2-cyclohexanedicarboxylate and diphenyl 1,4-cyclohexanedicarboxylate. These dicarboxylic acids or dicarboxylic acid esters may be used alone or in combination of two or more. The dicarboxylic acid or the dicarboxylic acid ester is contained in the above carbonate precursor in the amount of preferably 50% by mole or less, more preferably 30% by mole or less.
Polyfunctional compounds having 3 or more functional groups in one molecule can be used when producing a polycarbonate. These polyfunctional compounds are preferably a compound having a phenol-type hydroxyl group or a carboxyl group and particularly preferably a compound having 3 phenol-type hydroxyl groups.

Since a polycarbonate resin is excellent in transparency, heat resistance and impact resistance, it has been used so far for optical articles such as lenses and prisms and the like as an alternative material to glass. The resin, however, is added with a filler such as glass fiber when used in the area requiring high rigidity, due to the lower rigidity compared with glass. It has been a problem that when a glass filler is added to optical articles such as lenses and prisms and the like, transparency, which is an intrinsic and marked feature of a polycarbonate resin, is impaired, because there is great difference between the refractive index of glass (usually, about 1.545) and that of a polycarbonate resin (usually, about 1.582). On the contrary, as the molded product of the present invention is used for a window material for a lighting window and the like where degradation of transparency is not a problem, proper light diffusivity can be obtained by using specific flake-shaped glass as a glass filler.

The (meth) acrylic resin that can be used as a thermoplastic resin includes a polymer or a copolymer obtained by using methylmethacrylate, ethylmethacrylate, propylmethacrylate, butylmethacrylate and the like as a main raw material, and an acrylic ester having an alkyl group of 1 to 8 carbon atoms, vinyl acetate, styrene, acrylonitrile, methacrylonitrile and the like as a copolymerization component as needed. Further, a (meth) acrylic resin obtained by multi-stage polymerization can also be used.

The polyester resin includes a resin obtained by polymerizing a dicarboxylic acid-derived compound and/or an ester-forming derivative of a dicarboxylic acid, and diol compound and/or an ester-forming derivative of a diol compound. Specific examples are polyethylene terephthalate, polypropylene terephthalate, polybutylene terephthalate, polyhexamethylene terephthalate, polycyclohexane-1,4-dimethyl terephthalate, neopentyl terephthalate, polyethylene isophthalate, polyethylene naphthalate, polybutylene naphthalate and polyhexamethylene naphthalate and the like, or a copolymerized polyester of these. These polyester resins may be used alone or in combination of two or more.

The polyetherimide resin is a resin having an aromatic bond and an imide bond in its structural unit and is not particularly limited. Production method thereof is not particularly limited. The resin is usually synthesized by a known method as a polycondensed product of 4,4'-[isopropylidenebis(p-phenyleneoxy)diphthalic acid] dianhydride and m-phenylenediamine, or as a polycondensed product of 4,4'-[isopropylidenebis(p-phenyleneoxy)diphthalic acid] dianhydride and p-phenylenediamine. The resin may contain other copolymerizable monomer units such as an amide group, an ester group and a sulfonyl group and the like. These compounds can be used alone or in combination of two or more. The polyethersulfone resin is a resin containing a sulfonyl group having an aromatic bond in its structural unit.

The polystyrene resin is a polymer obtained by polymerizing an aromatic vinyl-based monomer, or a copolymer obtained by copolymerizing an aromatic vinyl-based monomer and another vinyl-based monomer copolymerizable with the above monomer. The aromatic vinyl-based monomer includes styrene, o-methylstyrene, p-methylstyrene, m-methylstyrene, α-methylstyrene, 2,4-dimethylstyrene, monochlorostyrene, dichlorostyrene, monobromostyrene, dibromostyrene, tribromostyrene, p-t-butylstyrene, ethylstyrene, divinylbenzene and the like. Among these, styrene and α-methylstyrene are preferably used from the standpoint of easy reaction and availability. These compounds are used alone or in combination of two or more.

The (meth)acryl-styrene copolymer (MS resin) is a copolymer of, for example, an alkyl (meth)acrylate and ari aromatic vinyl-based monomer such as styrene. The alkyl (meth)acrylate includes methyl methacrylate, ethyl methacrylate, n-butyl methacrylate, i-butyl methacrylate, t-butyl acrylate, 2-ethylhexyl methacrylate, stearyl methacrylate, methyl acrylate, ethyl acrylate, n-butyl acrylate; i-butyl acrylate, t-butyl acrylate, 2-ethylhexyl acrylate, stearyl acrylate and the like. These compounds are used alone or in combination of two or more.

The fluorine-based resin includes polyethylene fluoride, polyethylene difluoride, polyethylene tetrafluoride, an ethylene-ethylene difluoride copolymer, an ethylene-ethylene tetrafluoride copolymer, an ethylene tetrafluoride-perfluoroalkoxyethylene copolymer and the like.
In addition, a tetrafluoroethylene-perfluoro (alkyl vinyl ether) copolymer, a tetrafluoroethylene-hexafluoropropylene copolymer, an ethylene-tetrafluoroethylene copolymer, an ethylene-chlorotrifluoroethylene copolymer, a polychlorotrifluoroethylene polymer, polyvinylidene fluoride, vinyl fluoride and the like can be used.

The vinyl-based resin includes, for example, a polyvinyl acetal represented by polyvinyl butyral, polyvinyl chloride, a vinyl chloride-ethylene copolymer, a vinyl chloride-ethylene-glycidyl methacrylate copolymer, a vinyl chloride-ethylene-glycidyl acrylate copolymer, a vinyl chloride-glycidyl methacrylate copolymer, a vinyl chloride-glycidyl acrylate copolymer, polyvinylidene chloride, a vinylidene chloride-acrylonitrile copolymer, a polyvinyl acetate, an ethylene-vinyl acetate copolymer or a polyvinyl acetal-polyvinyl butyral mixture and the like.

The polyolefin resin includes a homopolymer of an α-olefin including ethylene, a copolymer (includes any copolymer of random, block and graft copolymers) composed of at least 2 kinds of α-olefins, or an olefin-based elastomer. The homopolymer of ethylene includes low-density polyethylene (LDPE), high-density polyethylene (HDPE), linear low-density polyethylene (LLDPE) and the like. The polymer of propylene includes not only a homopolymer of propylene, but also a copolymer of propylene and ethylene. The above olefin-based elastomer is a copolymer of ethylene and at least one α-olefin (for example, propylene, 1-butene, 1-hexene, 4-methyl-1-pentene) other than ethylene and includes an ethylene-propylene copolymer (EPR), an ethylene-butene copolymer (EBR), an ethylene-propylene-diene copolymer (EPDM) and the like.

The content of the above flake-shaped glass is required to be 0.1 to 20% by weight relative to a thermoplastic resin. The flake-shaped glass less than 0.1% by weight relative to a thermoplastic resin gives an insufficient haze, whereas the flake-shaped glass over 20% by weight undesirably causes unstable molding and makes pelletizing difficult.

In a sheet-shaped molding product, the relations between the total light transmittance and the haze relative to the content per unit area of flake-shaped glass/are shown in Figure. 1. The sheet-shaped molding product having 2. 0 mm thickness was molded using a polycarbonate resin as a matrix resin.
From the figure, it can be understood that the content of the flake-shaped glass in the above molded product is required to be in the range of 6 to 44.5 g/m² per unit area of the molded product. The content is more preferably 6 to 36 g/m² and particularly preferably 8 to 24 g/m². The flake-shaped glass of which the content is less than 6 g/m² per unit area of the molded product cannot give sufficient light diffusivity, whereas the content over 44.5 g/m² lowers the total light transmittance. Similar tendency to the above relations is obtained in not only a polycarbonate resin but also a (meth) acrylic resin, a polyetherimide resin and a fluoride-based resin, which have a similar refractive index to that of a polycarbonate resin.

The thickness of a molded product can be changed according to its use. The thickness is preferably 1.0 to 10.0 mm, particularly preferably 1.0 to 5.0 mm, although it cannot be specified because it depends on the kind and content of the flake-shaped glass. The molded product of a thickness less than 1.0 mm can not give sufficient light diffusivity, whereas the molded product of a thickness over 10.0 mm undesirably lowers total light transmittance.

The molded product has the characteristic of a total light transmittance of 60% or higher and a haze of 80% or higher. More preferably, the total light transmittance is 70% or higher and the haze is 90% or higher. The molded product having a total light transmittance lower than 60% cannot give translucency required for a window material for a lighting window, a waist-high window and the like, a construction material for a carport, and the like, a protecting cover for a lighting fixture and the like, and the like. The method for evaluating the total light transmittance and haze includes a method according to JIS K 7361 for total light transmittance (Tt) (unit: %) and JIS K 7136 for haze (H) (unit: %) using, for example, a commercially available haze meter.
The molded product of the present invention shows the above total light transmittance and haze and has simultaneously the conflicting functions of light diffusivity and translucency, which have not been seen so far. In addition; the molded product has the characteristic of good weatherability in use. The molded product of the present invention, therefore, can be favorably used in the area such as a window material for a lighting window, a waist-high window and the like, a construction material for a carport and the like, a protecting cover for a lighting fixture and the like, and the like, where privacy protection, design and taking soft light in the house are required.

### 2. Production method for the molded product

The production method for the molded product of the present invention is characterized in that flaked-shape glass of 5 to 50 µm mean particle diameter is blended with a thermoplastic resin at a ratio of 0.1 to 20% by weight relative to the thermoplastic resin followed by melt-kneading and thus obtained master batch is molded into a predetermined shape to obtain a molded product containing the flake-shaped glass at a ratio of 6 to 44.5 g/m² per unit area of the molded product.

First of all, a master batch is prepared by blending flaked-shape glass of 5 to 50 µm mean particle diameter with a thermoplastic resin at a ratio of 0. 1 to 20% by weight relative to the thermoplastic resin followed by melt-kneading. The content of the flaked-shape glass is required to be 0.1 to 20% by weight, preferably 0.1 to 10% by weight relative to the thermoplastic resin. The flake-shaped glass less than 0.1% by weight relative to a thermoplastic resin undesirably gives insufficient light diffusivity, whereas the flake-shaped glass over 20% by weight undesirably causes unstable molding and makes pelletizing difficult.

Particulates of flake-shaped glass and a thermoplastic resin, and other additives as needed are melt-kneaded using a melt-kneader such as an extruder and thus obtained melt-kneaded product is subjected to pelletizing. In this step, the above thermoplastic resin or a resin compatible therewith can be blended as needed.
Additives can be blended into the above master batch at a ratio of 10% by weight or less to the component composed of flake-shaped glass and a thermoplastic resin. The additives include, for example, a hindered phenol-based or phosphorus-based stabilizer; a hydroxybenzophenone-based, salicylic acid-based, HALS-based, triazole-based or triazine-based ultraviolet absorbent; phosphoric ester-based or phenol-based antioxidant; a coupling agent; a surfactant; an antistatic agent and a mold releasing agent and the like.
The above resin compatible with a thermoplastic resin includes, for example, an acrylate-based resin, a halogenated vinyl-based resin, a polyamide-based resin, a polycarbonate-based resin, an elastomer, a polyimide-based resin, a polyphenylene sulfide, a polyphenylene oxide, a polyacetal, a polysulfone and rubber, and a copolymer resin thereof and the like. These resins may be used alone or in combination of two or more.

For mixing and melt-kneading of each component, a preliminary mixer such as a ribbon blender, a tumbler, a Nauta mixer, a Henschel, mixer, a super mixer or a planetary mixer, and a melt-kneader such as a Banbury mixer, a kneader, a roll, a kneader-ruder, a single-screw extruder or a twin-screw extruder and the like can be used. It is preferable that raw materials are supplied to a melt-kneader after each component is mixed in advance, but it is also possible to supply each component independently to a melt-kneader. The pellet size is not particularly limited, but preferably, for example, about 1 to 10 mm, particularly preferably about 1 to 5 mm from the standpoint of easiness in handling and molding in general.

A molding method such as injection molding, extrusion molding, compression molding or rotation molding and the like can be used as the molding method for the molded product. Injection molding and extrusion molding, are particularly preferable because a molded product of an optional shape can be efficiently obtained by these methods. To obtain a board-shaped or film-shaped molded product by extrusion molding, a method is used where a melted thermoplastic resin extruded by an extruder equipped with a T-die is pulled by a cooling roll while being cooled.
The molding temperature depends on the kind of the resin, but should be higher than the melting point or glass transition temperature of the resin by 50 to 150°C so as to obtain sufficient fluidity. In the case of a polycarbonate resin, the molding temperature is, for example, 200°C or higher, preferably 240 to 330°C. Because the viscosity peculiar to polymers is not low enough at a lower temperature than 200°C, flake-shaped glass cannot be uniformly dispersed in a resin, whereas a resin undesirably tends to be degraded by decomposition at a higher temperature than 350°C.
Thus obtained window material for a lighting window, a waist-high window and the like, construction material for a carport and the like, and protecting cover for a lighting fixture and the like have a total light transmittance of 60% or higher and a haze of 80% or higher. More preferably, the total light transmittance is 70% or higher and the haze is 90% or higher.

Hereinafter, the present invention will be described more specifically with reference to examples and comparative examples. The present invention, however, is not limited at all to the following examples.

The optical characteristics of the obtained molded product were evaluated according to JIS K 7361 for total light transmittance Tt (unit: %) and JIS K 7136 for haze H (unit : %) using a haze meter (made by Murakami Color Research Laboratory).

### (Example 1)

Flake-shaped glass (made by Nippon Sheet Glass Co., Ltd., mean particle diameter: 15 µm, average thickness: 5.0 µm, average aspect ratio: 3) of 5% by weight relative to crushed powder (maximum particle diameter: 500 µm or less) of polycarbonate resin pellets (produced by GEP) was added to the above crushed powder and mixed uniformly followed by melt-kneading at 290°C with a twin-screw extruder (made by Toyo Seiki Seisaku-sho, Ltd.). Extruded strands of 3 mm in diameter were cut and pelletized to obtain a master batch of which the main component was the flake-shaped glass and the polycarbonate resin.
The mean particle diameter of the flake-shaped glass was measured with a particle size distribution measuring instrument using a laser diffraction-scattering method (made by NIKKISO CO., LTD., Microtrac HRA). The average thickness was obtained as a simple average value of 50 flake-shaped glass particles observed with an electron microscope and the average aspect ratio was calculated by dividing the above mean particle diameter by the above average thickness.
Further, the above master batch was added with polycarbonate resin pellets (produced by GEP) of the same kind as the above polycarbonate resin, mixed uniformly and then molded using an injection molding machine (made by Toyo Seiki Seisaku-sho Ltd.) equipped with a T-die so that the content of the flake-shaped glass per unit area of the molded product may be 6 g/m², to obtain a sheet-shaped molded product of 10 cm x 5 cm and a thickness of 2.0 mm.
The results of evaluation are shown in Table 1 and Figure 1. The total light transmittance Tt was 81.9% and the haze H was 80.1%.

### (Example 2)

A master batch was obtained in the same manner as in Example 1. The above master batch and polycarbonate resin pellets (produced by GEP) were mixed in the same manner as in Example 1 except that they were mixed so that the content of the flake-shaped glass per unit area of the molded product may be 12 g/m², to obtain a sheet-shaped molded product.
The results of evaluation for the obtained molded product are shown in Table 1 and Figure 1. The total light transmittance Tt was 79.7% and the haze H was 93.4%.

### (Example 3)

A master batch was obtained in the same manner as in Example 1. The above master batch and polycarbonate resin pellets (produced by GEP) were mixed in the same manner as in Example 1 except that they were mixed so that the content of the flake-shaped glass per unit area of the molded product may be 24 g/m², to obtain a sheet-shaped molded product.
The results of evaluation for the obtained molded product are shown in Table 1 and Figure 1. The total light transmittance Tt was 71.0% and the haze H was 97.9%.

### (Example 4)

A master batch was obtained in the same manner as in Example 1. The above master batch and polycarbonate resin pellets (produced by GEP) were mixed in the same manner as in Example 1 except that they were mixed so that the content of the flake-shaped glass per unit area of the molded product maybe 36 g/m², to obtain a sheet-shaped molded product.
The results of evaluation for the obtained molded product are shown in Table 1 and Figure 1. The total light transmittance Tt was 65.3% and the haze H was 98.4%.

### (Example 5)

A master batch was obtained in the same manner as in Example 1. The above master batch and polycarbonate resin pellets (produced by GEP) were mixed in the same manner as in Example 1 except that they were mixed so that the content of the flake-shaped glass per unit area of the molded product may be 44.5 g/m², to obtain a sheet-shaped molded product.
The results of evaluation for the obtained molded product are shown in Table 1 and Figure 1. The total light transmittance Tt was 60.3% and the haze H was 98.7%.

### (Comparative Example 1)

A master batch was obtained in the same manner as in Example 1. The above master batch and polycarbonate resin pellets (produced by GEP) were mixed in the same manner as in Example 1 except that they were mixed so that the content of the flake-shaped glass per unit area of the molded product may be 1.2 g/m², to obtain a sheet-shaped molded product.
The results of evaluation for the obtained molded product are shown in Table 1 and Figure 1. The total light transmittance Tt was 86.9% and the haze H was 29.5%. The content of the flake-shaped glass per unit area of the molded product was low, which resulted in high total light transmittance and too low haze.

### (Comparative Example 2)

A master batch was obtained in the same manner as in Example 1. The above master batch and polycarbonate resin pellets (produced by GEP) were mixed in the same manner as in Example 1 except that they were mixed so that the content of the flake-shaped glass per unit area of the molded product may be 72 g/m², to obtain a sheet-shaped molded product.
The results of evaluation for the obtained molded product are shown in Table 1 and Figure 1. The total light transmittance Tt was 45.6% and the haze H was 99.3%. The content of the flake-shaped glass per unit area of the molded product was too high, which resulted in low total light transmittance and too high haze.

**Table 1**

| | Content of Flake-shaped Glass in Sheet Molded Product (g/m²) | Optical Characteristic | |
|---|---|---|---|
| | | Total Light Transmittance Tt (%) | Haze H (%) Haze H (%) |
| Example 1 | 6 | 81.9 | 80.1 |
| Example 2 | 12 | 79.7 | 93.4 |
| Example 3 | 24 | 71 | 97.9 |
| Example 4 | 36 | 65.3 | 98.4 |
| Example 5 | 44.5 | 60.3 | 98.7 |
| Comparative Example 1 | 1.2 | 86.9 | 29.5 |
| Comparative Example 2 | 72 | 45.6 | 99.3 |

## Claims

1. A molded product having both of translucency and light diffusivity that is obtained by molding a resin composition blended with flake-shaped glass of 0.1 to 20% by weight relative to a transparent thermoplastic resin and **characterized by** containing the flake-shaped glass of a mean particle diameter of 5 to 50 µm therein at a ratio of 6 to 44.5 g/m² per unit area of the molded product.

2. The molded product according to claim, 1, **characterized in that** the flake-shaped glass is glass powder containing 50 to 65% by mole of SiO₂ 4 to 12% by mole of Al₂O₃, 5 to 25% by mole of SrO, 15% by mole or less of MgO, 10 to 35% by mole of CaO and 2% by mole or less of an alkaline metal oxide.

3. The molded product according to claim 1, **characterized in that** the flake-shaped glass has an average thickness of 0.1 to 5.0 µm and an average aspect ratio of 2 to 50.

4. The molded product according to claim 1, **characterized in that** the thermoplastic resin is at least one resin selected from a polycarbonate resin, a (meth) acrylic resin, a polyester resin, a polyetherimide resin, a polystyrene resin, a (meth) acryl-styrene copolymer (MS resin), a polyethersulfone resin, a fluorine-based resin, a vinyl-based resin and a polyolefin resin.

5. The molded product according to claim 1, **characterized in that** the total light transmittance thereof is 60% or higher and the haze thereof is 80% or higher.

6. A production method for the molded product according to any one claim of claims 1 to 5, **characterized in that** flake-shaped glass having 5 to 50 µm mean particle diameter is blended with a thermoplastic resin at 0.1 to 20% by weight relative to the thermoplastic resin followed by melt-kneading and then the obtained master batch is molded into a predetermined shape to obtain a molded product containing the flake-shaped glass at a ratio of 6 to 44.5 g/m² per unit area of the molded product.

7. The production method for a molded product according to claim 6, **characterized in that** a molding material composed of the same kind of thermoplastic resin as the above thermoplastic resin or a thermoplastic resin compatible therewith is added to a master batch and kneaded.

8. The production method for a molded product according to claim 6, **characterized in that** a master batch is molded by any method selected from injection molding, extrusion molding, compression molding and rotation molding.

9. The production method for a molded product according to claim 6, **characterized in that** a master batch is molded into any shape of a window material for a lighting window, a construction material for a carport and a protecting cover material for a lighting fixture.
